# EUROPEAN PATENT SPECIFICATION

(11) **EP 2 930 888 B1**
(45) Date of publication and mention of the grant of the patent: **22.05.2019**
(21) Application number: 14305535.8
(22) Date of filing: 11.04.2014
(51) Int. Cl.: H04L 12/58

(54) **Methods and apparatuses to centralize notifications addressed to a user**
Verfahren und Vorrichtungen zum Zentralisieren von Benachrichtigungen für einen Benutzer
Procédés et appareils pour centraliser les notifications adressées à un utilisateur

(43) Date of publication of application: 14.10.2015
(73) Proprietor: Alcatel Lucent, 91620 Nozay (FR)
(72) Inventor: Gereec, Erwan, 29806 Brest (FR); Bonnaud, Fabrice, 29806 Brest (FR)
(74) Representative: Nokia EPO representatives

(56) References cited:
- EP-A1- 2 461 279
- US-A1- 2011 153 686
- US-A1- 2012 036 200

## Description

### FIELD OF THE INVENTION

The present invention relates to the plurality of communication means available to a user, said communication means generating notifications intended to said user.

### BACKGROUND OF THE INVENTION

The realm of telecommunication has evolved drastically for the last decades, driven by new technologies and new habits of consumers. New services to interconnect a user with other users have come on top of traditional telephony networks offering abilities such as voicemail or automatic ring back. A major step in the evolution of telecommunication is mobile wireless communication, wherein a user can be reached or still get in touch with others even in nomadic situation. Said step has brought new use of telecommunication such as the intensive exchange of short text messages. Another major step in the evolution of telecommunication is the prominence of the Internet that has integrated everyday life of most of consumers of telecommunication services. Social networks have emerged from the Internet, creating new ways for users to socialize. EP 2 461 279 A1 discloses a method for presenting messages to a user of social network services which are provided via an aggregation system.

Each telecommunication service has usually a proper way to be controlled and used by a consumer. The variety of services implies a broad number of means that are often different from one to the other. Such broad number makes it complex for a user operating fixed or mobile devices to manage all possible channels of communications he is interacting with, especially when these channels have dedicated interfaces. For example, a user of a mobile device needs to operate a dedicated interface for managing missed calls, a dedicated software application to consult social network notifications, a mail application to check incoming mails etc. There exists in the prior art ways to federate some of these channels into a single interface on the mobile device, but it necessitates additional software applications because a single application may not be able to gather all channels of communication. Moreover these applications overlay completely one upon the other on the graphical user interface of the mobile device, preventing the user to access other services offered by his device. It is also frequent for a user to make daily use of several communications devices, like Android™ devices such as personal computer, tablet or smartphone. Actual existing solutions only provide per-device solutions which require the user to configure software applications of each device, which is not practical.

It is then required to offer to the user a seamless and ubiquitous way to consult notifications.

### SUMMARY OF THE INVENTION

The invention aims to remedy all or some of the disadvantages of the above identified prior art. It particularly proposes ways to enable centralization of notifications addressed to a user

A first aspect of the invention relates then to a method for a notification manager, for centralizing notifications intended to a user, said notification manager being in a communication network, and being connected to a first content server and a second content server, said method comprising the following steps executed by the notification manager:
- establishing a first communication channel with a first communication equipment operated by the user,
- collecting regularly a first set of notifications from the first content server,
- collecting regularly a second set of notifications from the second content server,
- aggregating regularly the first set of notifications and second set of notifications into a first set of aggregated notifications,
- adapting regularly the first set of aggregated notifications according to the characteristics of the first communication equipment of the user,
- transmitting regularly the first set of aggregated notifications to the first communication equipment, where the first set of aggregated notifications is displayed on a first widget running on the first communication equipment.

Thus, thanks to these features, the method enables the notification manager to centralize notifications from various content servers. The step of aggregating the first set of notifications and second set of notifications into a same set of aggregated notifications, enables the notification manager to send all the notifications towards a single user equipment. Then the step of adapting the set of aggregated notifications according to the characteristics of this communication equipment, enables the set of aggregated notifications to be received and exploited by this single user equipment. Thus a user operating several fixed or mobile devices can easily receive and manage all possible channels of communications with a single device, even when these channels usually need dedicated interfaces. The method offers the flexibility to the notification manager to collect and aggregate notifications from different content servers. Advantageously the method allows the notification manager to cooperate with the first communication equipment, as a unified functionality instead of communicating with each content server.

According to various embodiments, such method comprises one or more of the features below, which should be considered in any possible technical combinations:
- the method further comprises the following steps performed by the notification manager:
   ∘ receiving from the first communication equipment a feedback message, said feedback message comprising an event,
   ∘ determining that the event is related to a notification from the first set of notifications and is directed to the first content server,
   ∘ forwarding the received feedback message to the first content server.
- the notification manager is connected to a second communication equipment from the user, said connection is established through a second communication channel, and said method further comprising the step of transmitting the first set of aggregated notifications to the second communication equipment.
- the step of adapting regularly the first set of aggregated notifications further adapts said first set of aggregated notifications to be provided to the user through a first widget from the first communication equipment.
- the method further comprises a step of providing a first notifications configuration to the notification manager, by the first communication equipment.

A second aspect of the invention relates to a method for a first communication equipment operated by a user, said method comprising the following steps executed by the first communication equipment:
- establishing a first communication channel with a notification manager,
- receiving regularly from the notification manager a first set of aggregated notifications, said first set of aggregated notifications comprising a first set of notifications from a first content server and a second set of notifications from a second content server, said first set of aggregated notifications having been adapted by the notification manager according to the characteristics of the first communication equipment and being displayed on a first widget running on the first communication equipment.

Thus, thanks to these features, the method enables the first communication equipment to establish the communication channel with a notification manager and to receive from said notification manager the first set of aggregated notifications that comprises notifications from various content servers. The method offers to the first communication equipment a convenient access to a unified functionality for receiving notifications from different content servers. Thus a user operating the first communication equipment can easily receive and manage all possible channels of communications, even when these channels usually need dedicated interfaces.

According to various embodiments, such method comprises one or more of the features below, which should be considered in any possible technical combinations:
- the method further comprising the following steps:
   ∘ determining an event from the received first set of aggregated notifications, said event being related to the first set of notifications from the first content server,
   ∘ sending to the notification manager a feedback message comprising the event.
- the method further comprises a step of providing to the user through a first widget from the first communication equipment the received first set of aggregated notifications.
- the event is determined from an interaction generated by the user, said user interacting with the first widget from the first communication equipment.

A third aspect of the invention relates to a notification manager for centralizing notifications addressed to a user, when notification manager is in a communication network, and it is connected to a first content server and a second content server, said notification manager comprising:
- a service interface for establishing a first communication channel with a first communication equipment from the user, and for transmitting regularly a first set of aggregated notifications to the first communication equipment,
- a collecting service for collecting regularly a first set of notifications from the first content server, and a second set of notifications from the second content server,
- an aggregation service for aggregating regularly the first set of notifications and second set of notifications into the first set of aggregated notifications,
- an adaptation service for adapting regularly the first set of aggregated notifications according to the characteristics of the first communication equipment of the user, where the first set of aggregated notifications is displayed on a first widget running on the first communication equipment.

Thus, thanks to these features, the notification manager is a central manager for notifications from several content servers. The collected sets of notifications by the collecting service are aggregated into a set of aggregated notifications by the aggregating service. The adaptation service that adapts the set of aggregated notifications according to the characteristics of the communication equipment of the user, enables the set of aggregated notifications to be received and exploited by this single user equipment. Thus a user operating several fixed or mobile devices can easily receive and manage all possible channels of communications with a single device, even when these channels usually need dedicated interfaces. Advantageously the notification manager offers a unified functionality to gather notifications from the first content server and the second content server, and to transmit aggregated notifications to the first communication equipment.

According to various embodiments, such notification manager comprises one or more of the features below, which should be considered in any possible technical combinations:
- the service interface for establishing a first communication channel is further adapted:
   ∘ for receiving from the first communication equipment a feedback message, said feedback message comprising an event,
   ∘ for determining that the event is related to a notification from the first set of notifications and is directed to the first content server,
   ∘ for forwarding the received feedback message to the first content server.
- the adapting service comprises means to adapt the first set of aggregated notifications so that it can be provided to the user through a first widget from the first communication equipment.

A fourth aspect of the invention relates to a first communication equipment for centralizing notifications addressed to the user, comprising:
- a device interface for establishing a first communication channel with a notification manager, and for receiving regularly from the notification manager a first set of aggregated notifications, said first set of aggregated notifications comprising a first set of notifications from a first content server and a second set of notifications from a second content server, said first set of aggregated notifications having been adapted by the notification manager according to the characteristics of the first communication equipment,
- a display service for displaying the received first set of aggregated notifications on a first widget running on the first communication equipment.

Thus, thanks to these features, a user operating the first communication equipment can easily receive and manage all possible channels of communications, even when these channels usually need dedicated interfaces. The first widget enables a convenient display of said aggregated notifications with an optimal visibility on the first communication equipment.

According to various embodiments, such method comprises one or more of the features below, which should be considered in any possible technical combinations:
- the first communication equipment further comprising an event determination device for determining an event from the received first set of aggregated notifications, said event being related to the first set of notifications from the first content server, and wherein the device interface is further adapted for sending to the notification manager a message feedback comprising the event,
- the event determination device is further adapted to determine the event by an interaction of the user with the first widget running on the first communication equipment.

### BRIEF DESCRIPTION OF THE FIGURES

Some embodiments of the present invention are now described, by way of example only, and with reference to the accompanying drawings, in which:
- FIG. 1 is a schematic block diagram of a communication network comprising an embodiment of a notification manager,
- FIG. 2 is a schematic block diagram of a communication network comprising an embodiment of a communication equipment,
- FIG. 3 is a flowchart showing steps performed in this embodiment of the methods according to the invention,

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

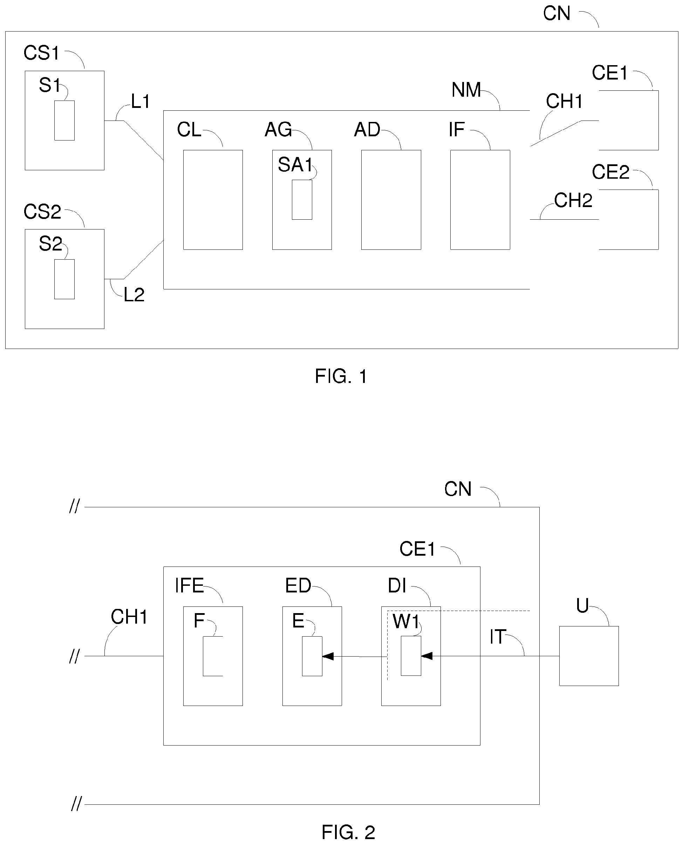

Referring to **FIG. 1**, a schematic block diagram of a communication network comprising an embodiment of a notification manager is depicted.

In this embodiment, a communication network CN is simplified to few elements in order to expose the invention. The communication network CN is a network for carrying electronic communications exchanged between users operated devices and different network elements such as nodes for transporting data or signaling information. In a non limiting example the communication network is a global system of interconnected devices and network elements such as the Internet. In another non limiting example, the communication network CN is a wide area network (WAN), which may be comprised in the Internet.

The communication network CN comprises:
- a first content server CS1,
- a second content server CS2,
- a notification manager NM,
- a first link L1 that connects the first content server CS1 with the notification manager NM,
- a second link L2 that connects the second content server CS2 with the notification manager,
- a first communication equipment CE1 operated by a user U,
- a second communication equipment CE2 operated by the user U,
- a first channel CH1 that connects the first communication equipment CE1 with the notification manager NM,
- a second channel CH2 that interfaces the second communication equipment CE2 with the notification manager NM.

The first communication equipment CE1 is a device operated by the user U. The first communication equipment CE1 is adapted to access the communication network CN, said access either being a wired access or a wireless access. In non limiting examples, the first communication equipment CE1 is a smartphone, or tablet, or laptop, or any personal devices with telecommunication capabilities.

Similarly the second communication equipment CE2 is a device operated by the user U. Said second communication equipment CE2 is also adapted to the communication network CN, by different means such as fixed access or a wireless access.

Nowadays it is common for users to own several connected devices. For example the user U may own two smartphones, respectively the first communication equipment CE1 for professional use and the second communication equipment CE2 for private use. It is also frequent also to combine the simultaneous use of two or more connected devices. In another non limiting example, the user U may consult electronic document on an electronic reader as the first communication equipment CE1 and simultaneously uses a laptop as second communication equipment CE2.

The first content server CS1 is serving content in the communication network CN. A requester such as the user U addresses a request for content to the first content server CS1 that in returns serves the designated content, which is carried out to the requester through the network elements of the communication network CN. Availability of content is signaled through a first set of notifications S1.

In a non limiting example, the first content server CS1 is a multimedia content server. It may be a video streaming server adapted to provide streamed video to a requester such as the user U. The first content server CS1 also provides first set of notification S1 of new available video streams, informing the user U that new content can be retrieved from first content server CS1.

In another non limiting example, the first content server CS1 is a server from a social network service. The first content server CS1 distributes first set of notifications S1 of incoming messages addressed to the user U. Said messages may be text messages or pictures. The first set of notifications S1 of incoming message informs the user U that his messages inbox should be checked. The first content server CS1 may be a node from Facebook™ social network service, said server serving notifications of "pokes", messages or "likes" in a non limiting example. The first content server CS1 maybe a node from Twitter™ microblogging service, said server serving notifications of new "tweets" or "retweets" or trends, in another non limiting example.

In another non limiting example, the first content server CS1 is a node from a voice service, such as Voice over IP (VoIP). The first content server CS1 is adapted to manage inbound and outbound calls from/to users such as the user U. The first content server CS1 sends also the first set of notifications S1 related to voice calls. Such first set of notifications S1 comprises for example a notification of an incoming call. The first set of notification S1 may be then followed by a new first set of notification S1 indicating a missed call corresponding to the unanswered incoming call. Another first set of notifications S1 may be then sent to the user U to notify him that a vocal message is available on his voice mail. Alternatively the first set of notifications S1 may comprise in a single message addressed to the user U, the notification of the incoming call, the corresponding missed call notification, and the resulting notification of available voice message
Similarly to the first content server CS1, the second content server CS2 is serving content upon requests, and addresses the second set of notifications S2 of new content available, said notifications are intended for the user U. In a non limiting example, the second content server CS2 is a node from a wireless telecommunication service provider, said node being in charge of distributing short text messages from Short Message Service (SMS) and/or multimedia messages from Multimedia Message Service (MMS). The second content server CS2 is adapted to distribute the second set of notifications S2 for sending notice to the user U that a new text message or a new multimedia message is available to be consulted.

The first set notifications S1 and the second set of notifications S2 respectively comprise notifications addressed to the user U. Said first set S1 and second set S2 of notifications are messages signaling the availability of new content. In a non limiting example the first of notifications S1 comprises a notification of a new video to be streamed, said notification comprising an indicator of new content and the name of the new video, or a resource link pointing to the said new content. In another non limiting example, upon a new voice message on a voice mail service, the second set of notifications S2 may comprise an event

The notification manager NM is a service available on the communication network CN. It is adapted to gather sets of notifications from various origins. In an embodiment, the notification manager NM is an equipment from the service provider operating part of the communication network CN. In another embodiment, the notification manager NM is a software module executed on a network element of the communication network CN.

The notification manager NM is interfaced with the first content server CS1 and the second content server CS2, respectively through the first link L1 and the second link L2.

In a non limiting example, the first link L1 is a physical connection between the first content server CS1 and the notification manager NM. In another non limiting example, the second link L2 is a logical connection between said notification manager NM and the second content server CS2.

The notification manager NM is able to handle various protocols to communicate with content servers such as the first content server CS1 and the second content server CS2. In a non limiting example, the notification manager NM comprises Application Layer Interface API to exchange messages with content servers, such as the Facebook API, or the Twitter API, or a Unified Communication solution such as the Open Touch™ API. In another non limiting example, the notification manager NM offers the flexibility to be updated to add the compatibility with additional APIs.

The notification manager NM collects regularly the first set of notifications S1 from the first content server CS1. Said notification manager NM collects also regularly the second set of notifications S2 from the second content server CS2.

The collection of the first set of notification S1 and the second set of notifications S2 is achieved by a collecting service CL. Said collecting service CL is a device comprised in the notification manager NM in a non limiting example, or a software module from the notification manager NM in another non limiting example.

It is meant hereinafter by the term collecting, an autonomous action from the notification manager NM to retrieve from a content server, a set of notification. Alternatively, it is meant also hereinafter by the term collecting, that the notification manager NM automatically receives a set of notification from a content server, said notification manager NM not needing to interrogate the said content server.

It is meant by the term regularly hereinafter, used with the term collecting or other terms such as the term aggregating etc., that the associated action is performed multiple times over time. The action associated to the term regularly may be executed several times on a predefined schedule, or on a periodical basis, or on non-regular time intervals.

The notification manager NM processes all the collected set of notifications such as the first set of notifications S1 and the second set of notifications S2. Said processing involves an aggregation service AG that aggregates the gathered first set of notification S1 and the second set of notifications S2 into a first set of aggregated notifications SA1.

The aggregation service AG is a function from the notification manager NM. In a non limiting example the aggregation service AG is software service executed by the notification manager NM. In another non limiting example, the aggregation service AG is a hardware circuit operated along with software routines comprised in the notification manager NM.

In a non limiting example, the aggregation service AG builds the first set of aggregated notifications SA1 from the raw juxtaposition of the first set of notifications S1 and the second set of notifications S2. In another non limiting example, the aggregation service AG extracts useful information from each collected set of notifications, said useful information are then gathered into the first set of aggregated notifications SA1.

In an embodiment, the processing of the collected set of notifications by the notification manager NM involves an adaptation service AD. Said adaptation service AD is a service for formatting the first set of aggregated notifications SA1 according to the characteristics of first communication equipment CE1 operated by the user U. In non limiting examples the adaptation service AD is a device or a software module from the notification manager NM.

The adaptation service AD is in charge of adapting the first set of aggregated notifications SA1 in order to use optimally the display, or the features of the first communication equipment CE1. In a non limiting example, if the first communication equipment CE1 is a small form factor mobile device with a limited display, the adaptation service AD may shorten the text associated to the notifications from the first set of aggregated notifications SA1. In another non limiting example, the adaptation service AD adapts the first set of aggregated notifications SA1 according to the software application that the first communication equipment CE1 is capable of running.

Alternatively the adaptation service AD cooperates with the aggregation service AG, in order to adapt the collected set of notifications on the fly while they are aggregated into the first set of aggregated notifications SA1.

The notification manager NM comprises an interface service IF. Said interface service IF is adapted to link the notification manager NM to the first communication equipment CE1 and the second communication equipment CE2. The interface service IF provides also received messages from said first CE1 and second CE2 communication equipments to the services from the notification manager NM.

The notification manager NM is adapted to dispatch/receive through the interface service IF, messages to/from the equipments from the user U, respectively through the first channel CH1 for the first communication equipment CE1, and through the second channel CH2 for the second communication equipment CE2. The notification manager NM transmits trough the channel CH1 the first set of aggregated notifications SA1 to the first communication equipment CE1, said transmission is performed on a regular basis. Similarly the notification manager NM is adapted to transmit the first set of aggregated notifications SA1 to the second communication equipment CE2.

In a non limiting example, the first communication channel CH1 and the second communication channel CH2 are connecting directly the notification manager NM with the respective first communication equipment CE1 and second communication equipment CH2. In another non limiting the first communication channel CH1 is a physical link between the notification manager NM and the first communication equipment CE1, and the second communication channel CH2 is a logical link, carried over a plurality of physical links, that connects the notification manager NM and the second communication equipment CE2.

Referring to figure **FIG. 2**, a schematic block diagram of a communication network comprising an embodiment of a communication equipment is depicted.

The first communication equipment CE1 comprises a device interface IFE adapted to manage messages exchanged with the notification manager NM through the first channel CH1. For that purpose the device interface IFE comprises means for receiving messages such as the first set of aggregated notifications SA1, and transmitting messages to the notification manager NM. In a non limiting example wherein the first communication equipment CE1 is an Android™ smartphone, the device interface IFE is a software module from the Android™ operating system.

The first communication equipment CE1 further comprises a display service DI. The display service is adapted to display on the first communication equipment CE1, various graphical information intended to the user U. Said graphical information enables the user U to interact with the first communication equipment CE1. In a non limiting example, the first communication equipment CE1 is feature phone with a candy bar form factor and the display service DI operates a display screen. In another non limiting example, the first communication equipment CE1 is a tablet and the display service DI operates a tactile display screen.

The display service DI is also adapted to display a first widget W1. Said first widget W1 is a graphical element providing a graphical interface for the display of the first set of aggregated notifications SA1. The first widget W1 is running on the first communication equipment CE1 as a software application that uses a graphical interface that overlays on the main display of said first communication equipment CE1. The first widget W1 has resizable dimensions that are smaller than the maximum dimensions displayable by the first communication equipment CE1. The first communication equipment CE1 is adapted to display simultaneously graphical elements of his main display and the first widget W1. It is meant herein after by the term widget, the combination of the graphical elements displayed and the associated software application. In non limiting examples, said software application manages the characteristics of the graphical elements, and offers means for the user U to interact with the first widget W1.

The first widget W1 is adapted to process and display the first set of aggregated notifications SA1. Said processing by the first widget W1 is performed so that the display of the first set of aggregated notifications SA1 fits the current dimensions of the graphical representation of said first widget W1 on the display of the first communication equipment CE1.

The first widget W1 comprises means to display the first set of aggregated notifications SA1, so that some or all notifications from the first set of notifications S1 and from the second set of notifications S2 are available to the user U.

The first widget W1 is also able to receive and process interaction from the user U, while said user is consulting said first widget W1. Upon a notification from the first set of notifications S1 or from the second set of notifications S2, the user U may react to said notification and may initiate then an associated event. In a non limiting example, the first widget W1 is displaying the first set of aggregated notifications SA1 that comprises a notification from a new available e-mail from the first set of communication S1, and a notification of a VoIP missed-call from second set of notification S2. In this example, said e-mail and VoIP missed-call have been issued by the same contact person from the user U that indicates him that he should get back to this contact person by interacting with the first widget W1. Said action could be for example to get in touch with the contact person through a VoIP call or by replying to his e-mail.

Such possible action from the user U, in response to a notification from the first set of aggregated notifications SA1 is initiated by an interaction IT of the user U on the first communication equipment CE1, and more particularly with the first widget W1. In non limiting examples, the interaction IT is a gesture detected by the first widget W1 or the first communication equipment CE1. In other non limiting examples, the interaction IT may be a vocal command or a combination of inputted keys from the physical or virtual keyboard of the first communication equipment CE1.

The first widget W1 comprises means to process the interaction IT and to forward it to an event determination device ED. Said event determination device ED further processes the interaction IT in order to determine an event E corresponding to the interaction IT. The event determination device ED analyzes the interaction IT with respect to the first set of aggregated notifications SA1 managed by the first widget W1. The analysis is conducted in order to establish the event E that matches the intent of the user U when he initiated the interaction IT. In a non limiting example, the event determination device ED is analyzing the interaction IT as a gesture to call back the caller of a missed-call from a private enterprise telephony service. The event E is then determined as being a request to establish a voice call between the user U and the previous caller, said call to be handled by the private enterprise telephony service.

In a non limiting example, the event determination device ED is a software service from the operating system of the first communication equipment CE1 or is a software module from the first widget W1. In another non limiting example, the event E is a descriptor that may comprise references to standardized telecommunication protocol or specific control commands directed to a network element, said references or commands should trigger a response to the interaction IT from the user U. In another non limiting example, the event E is a descriptor that comprises a reference to the first content server CS1 which issued the notification corresponding to the interaction IT generated by the user U.

The event E is provided to the device interface IFE, which builds a feedback message F that comprises said event E. The feedback message F is directed to a network element that is able to respond or process the event E. The device interface IFE sends the feedback message F to the notification manager NM through the first channel CH1.

The interface service IF from the notification manager NM is adapted to receive the feedback message F sent by the device interface IFE from the first communication equipment CE1. The interface service IF comprises means able to decode and process if needed the feedback message F. Such processing may be an analysis of the format of the feedback message F and modification of said format in a non limiting example. Such processing may also be an extraction of the event E in order to adapt the descriptor comprised in said event E. In these examples, the purpose of the processing is to render the feedback message F compatible to the recipient of said message.

The interface IF is also adapted to determine to which set of notifications the event E is related. In a non limiting example the interface IF determines that the event E is related to a notification from the first set of notifications S1 from the first content server CS1. Said determination allows the notification manager to associate the event E to said first content server CS1. In another non limiting example, the interface IF determines that another event is related to a notifications from the second set of notifications S2, and that the message comprising said other event is intended to the second content server CS2.

The interface service IF is able to forward the received feedback message F to the network element targeted by the action initiated by the user U, who created the interaction IT. For the description of this embodiment, the targeted network element is the first content server CS1, which is related to the interaction IT from the user U. The first content server CS1 is able to respond to the action from the user U. It should be noted that upon receiving the feedback message F, the interface service IF is also able to forward it to another content server, such as the second content server CS2, in the case the feedback message F is comprising an event E directed to said second content server CS2.

The feedback message F is forwarded by the interface service IF from the notification manager NM to the first content server CS1, through the first link L1. The first content server CS1 is adapted to receive the feedback message F, and to process it. The content of the said feedback message F is analyzed and the event E is extracted by the first content server CS1. The first content server CS1 then responds to the initial interaction IT, by triggering a response corresponding to the event E. In a non limiting example, the event E is related to establish a VoIP call between the user U, and another user who tried to reach said user U. In another non limiting example, the first content server CS1 initiates social media functionality on the first communication equipment CE1, as the event E is related to the interaction IT, said interaction IT is generated by the user U as he reacts to a notification from a social media service.

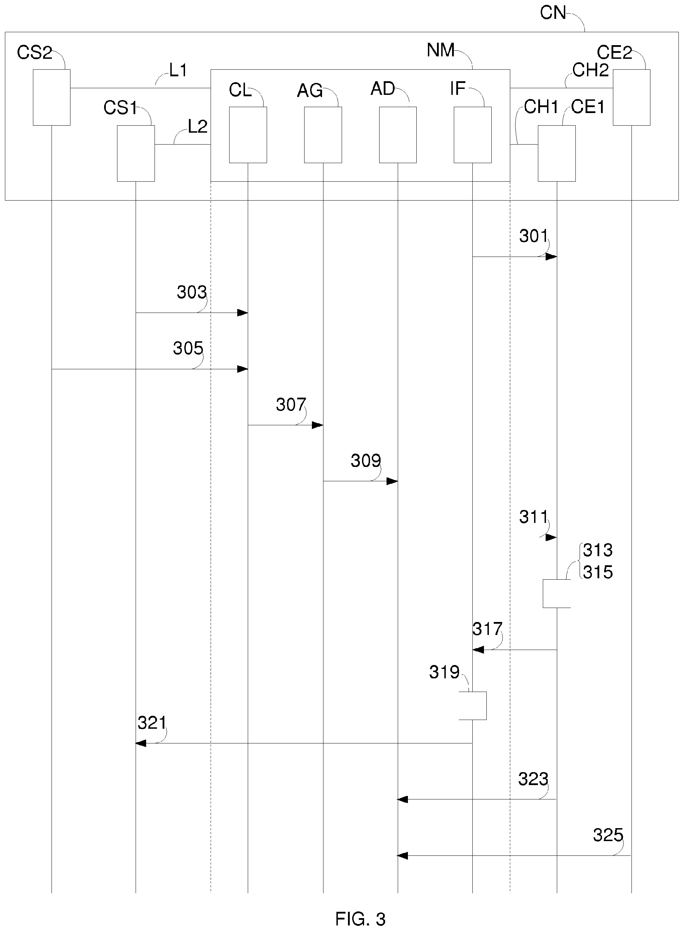

**FIG. 3** describes a flowchart showing steps performed in this embodiment of the methods according to the invention.

The notification manager NM centralized notifications from content servers and cooperates with the first communication equipment CE1 according to the following steps.

**Step 301**: The notification manager NM and the first communication equipment CE1 establish the first communication channel CH1. In a non limiting example, the establishment of the first communication channel CH1 is initiated by the first communication equipment CE1, whereas in another non limiting example the notification manager NM initiates the connection through the first communication channel CH1.

**Step 303**: The first content server CS1 sends regularly the first set of notification S1, which are collected regularly by the notification manager NM. The collecting service CL performs the collection of the first set of notifications S1.

**Step 305**: The notification manager NM collects regularly the second set of notifications S2 from the second content server CS2. The collecting service CL performs said collection of the second set of notifications S2.

**Step 307**: With the collected first set of notifications S1 and the second set of notifications S2, the notification manager NM performs regularly an aggregation of said set of notifications, resulting in the first set of aggregated notifications SA1. The aggregation service AG performs the aggregation of the collected first set of notifications S1 and the second set of notifications S2.

**Step 309**: In this optional step, the adaptation service AD formats if needed the first set of aggregated notifications SA1.

**Step 311**: The first set of aggregated notifications SA1 is transmitted regularly to the first communication equipment CE1, through the first channel CH1. Said transmission is achieved by the interface service IF.

**Step 313**: The first set of aggregated notifications SA1 is provided to the user U through the first widget W1. The user U generates then the interaction IT in response to a notification from the first set of aggregated notifications SA1 displayed by the first widget W1.

**Step 315:** The event E is determined from the first set of aggregated notifications SA1, said event E is related to the first set of notifications S1. The event E is determined from the interaction IT of the user U with the first communication equipment CE1. The event E is determined by the event determination device ED.

**Step 317**: The feedback message F comprising the event E is sent from the first communication equipment CE1 to the notification manager NM. The device interface IFE builds said feedback message F and transmits it through the first channel CH1. Said feedback message F is then received by the notification manager NM through its service interface IF.

**Step 319**: The service interface IF comprised in the notification manager NM processes the feedback message F that comprises the event E. The service interface IF determines from said event E to which content server it is addressed. In a non limiting example, the service interface IF determines that the event E is related to a notification from the first set of notifications S1. In an embodiment the notification manager NM adapts if needed the feedback message F, and then sends it to the first content server CS1 through the first link L1.

**Step 321**: The feedback message F is forwarded to the first content server CS1 by the notification manager NM.

In a step not depicted on figure FIG. 3, the first content server CS1 answers to the received feedback message F in order to fulfill the intent of the user U that reacted to the first set of aggregated notifications SA1. In a non limiting example, the first content server CS1 cooperates with the first communication equipment CE1 to startup the appropriate software application corresponding to the content or services provided by the first content server CS1.

In another embodiment, the notification manager NM cooperates with the second communication equipment CE2 according to the following steps.

In a step not depicted on figure FIG. 3, the second communication channel CH2 is established between the notification manager NM and the second communication equipment CE2. The interface service IF manages respectively the first communication channel CH1 and the second communication channel CH2.

In another step not depicted on figure FIG. 3, the first set of aggregated notifications SA1 is transmitted regularly to the second communication equipment CE2, through the second channel CH2. Said transmission is achieved by the interface service IF.

In yet other steps not depicted on figure FIG. 3, the second communication equipment CE2 provides to the user U the first set of aggregated notifications SA1 through a second widget. The user U initiates then another interaction, which similarly is translated into another event. Said other event is then sent back to the appropriate content server, through another feedback message.

In another embodiment not depicted on figure FIG. 3, the adaptation service AD adapts the first set of aggregated notifications SA1 respectively for the first communication equipment CE1 and for the second communication equipment CE2. Specific adaptations of the first set of aggregated notifications SA1 to each of the user U's communication equipment may be convenient for matching specificities of each equipment, such as the characteristics of their displays, or the available input mechanisms for generating interactions such as the interaction IT.

In another embodiment, in the **step 323**, the first communication equipment CE1 provides a first notifications configuration to the notification manager NM. Said first notifications configuration comprises rules or instructions for the notification manager NM. In a non limiting example the first notifications configuration comprises subscription instructions from the user U related to the notifications distributed by the first content server CS1.

In another non limiting example, the first notifications configuration comprises rules to adapt the first set of aggregated notifications SA1. The first notifications configuration may be defined by the user U through the first widget W1, in a non limiting example, in order to have displayed on the first widget W1, the notifications of the first set of aggregated notifications SA1 that are of interest for said user U. The user U may select from the first widget W1, to have access to the notifications from the first content server CS1, and not from the second content server CS2 in a non limiting example. In another non limiting example, the user U may chose to have one notification per content server, from the first set of aggregated notifications SA1, to be managed by the first widget W1.

In another embodiment, the first notifications configuration is used in the **step 309** wherein the adaptation service AD formats the first set of aggregated notifications.

Similarly, in another embodiment, in the **step 325**, the second communication equipment CE2 provides a second notifications configuration to the notification manager NM. In a non limiting example, said second notifications configuration comprises indication for the adaptation service AD to tailor the first set of aggregated notifications SA1. Said tailoring is decided by the user U, through the second communication equipment CE2 that handles the second widget. In a non limiting example, the user U may define an arrangement of the notifications from the first of aggregated notifications SA1, to be processed by the second widget.

In another non limiting example, the second notifications configuration defines if the user U is awaiting notifications related to the first set of notifications S2 from the second content server CS2.

The present invention provides methods and devices for centralizing various notifications addressed to a user.

The notification manager NM centralizes various notifications, coming from the first content server CS1 and the second content server CS2. Advantageously, on a single network element, notifications from different services are collected and then aggregated. Such services may be social media services, telephony services, or multimedia services.

The notification manager NM offers a flexible solution as it is able to interconnect with various kinds of protocols by using implementing API from services vendors.

The notification manager NM also offers means for aggregating notifications addressed to the user U, and to adapt them to the devices operated by said user U. Advantageously the notification manager NM is a central point for users of communication equipments. Instead of having to interact with a plurality of services provider, the user U conveniently operates his devices to cooperate with the notification manager NM, acting as a frontend for the user U. The notification manager NM offers then a unified functionality to gather notifications from various content servers.

Accommodatingly the notification manager NM prepares the aggregated notifications for the first widget W1 that provides the notifications to the user U. Said first widget W1 offers a convenient mean to consult the notifications. The first widget W1 is configurable so that its visibility is the most optimal according to the user U. The first widget W1 allows also configuring the aggregation and the adaptation of the notifications from the content servers, so that the aggregated notifications sent by the notification manager NM are the most efficient.

The notification manager NM is not restricted to the user U, and also offers collection, aggregation, transmission services of notifications to other users, said services are conveniently allowing the other users to use a unified solution for consulting notifications.

The first widget W1 allows also the user U to simply react to a notification from the aggregated notifications. By interacting with the first widget W1, upon a notification of interest extracted from the first set of aggregated notifications SA1, the user U may seamlessly triggers the event E, which is returned back to the concerned content server. Said content server shall then respond to the interaction IT from the user U to complete the intent of the user U.

Advantageously the first widget W1 is a central point for notifications, and for triggering the content service associated to a notification. Instead of using various software applications from his communication equipment, meaning one software application per content service, the user U is enabled to have an overview of notifications from different content service providers, and with a simple interaction such as gesture, start the service associated with the notifications.

## Claims

1. A method for a notification manager (NM), for centralizing notifications intended to a user (U), said notification manager (NM) being in a communication network (CN), and being connected to a first content server (CS1) and a second content server (CS2), said method comprising the following steps executed by the notification manager (NM):
- establishing (301) a first communication channel (CH1) with a first communication equipment (CE1) operated by the user (U),
- collecting (303) regularly a first set of notifications (S1) from the first content server (CS1),
- collecting (305) regularly a second set of notifications (S2) from the second content server (CS2),
- aggregating (307) regularly the first set of notifications (S1) and second set of notifications (S2) into a first set of aggregated notifications (SA1),
- adapting (309) regularly the first set of aggregated notifications (SA1) according to the characteristics of the first communication equipment (CE1) of the user (U),
- transmitting (311) regularly the first set of aggregated notifications (SA1) to the first communication equipment (CE1, where the first set of aggregated notifications (SA1) is displayed on a first widget (W1) running on the first communications equipment (CE1).

2. A method according to claim 1, wherein the method further comprises the following steps performed by the notification manager (NM):
- receiving (317) from the first communication equipment (CE1) a feedback message (F), said feedback message (F) comprising an event (E),
- determining (319) that the event (E) is related to a notification from the first set of notifications (S1) and is directed to the first content server (CS1),
- forwarding (321) the received feedback message (F) to the first content server (CS1).

3. A method according to any of the claims 1 to 2, wherein the notification manager (NM) is connected to a second communication equipment (CE2) from the user (U), said connection is established through a second communication channel (CH2), and said method further comprising the step of transmitting the first set of aggregated notifications (SA1) to the second communication equipment (CE2).

4. A method according to any of the claims 1 to 3, wherein the step of adapting (309) regularly the first set of aggregated notifications (SA1) further adapts said first set of aggregated notifications (SA1) to be provided to the user (U) through the first widget (W1) from the first communication equipment (CE1).

5. A method according to claim 4, wherein the method further comprises a step of providing (323) a first notifications configuration to the notification manager (NM), by the first communication equipment (CE1).

6. A method for a first communication equipment (CE1) operated by a user (U), said method comprising the following steps executed by the first communication equipment (CE1):
- establishing (301) a first communication channel (CH1) with a notification manager (NM),
- receiving (311) regularly from the notification manager (NM) a first set of aggregated notifications (SA1), said first set of aggregated notifications (SA1) comprising a first set of notifications (S1) from a first content server (CS1) and a second set of notifications (S2) from a second content server (CS2), said first set of aggregated notifications (SA1) having been adapted by the notification manager (NM) according to the characteristics of the first communication equipment (CE1) and being displayed on a first wigdet (W1) running on the first communication equipment (CE1).

7. A method according to claim 6, further comprising the following steps:
- determining (315) an event (E) from the received first set of aggregated notifications (SA1), said event (E) being related to the first set of notifications (S1) from the first content server (CS1),
- sending (317) to the notification manager (NM) a feedback message (F) comprising the event (E).

8. A method according to any of the claims 6 to 7, wherein the method further comprises a step of providing (313) to the user (U) through the first widget (W1) from the first communication equipment (CE1) the received first set of aggregated notifications (SA1).

9. A method according to claim 8, wherein the event (E) is determined (315) from an interaction (IT) generated (313) by the user (U), said user (U) interacting with the first widget (W1) from the first communication equipment (CE1).

10. A notification manager (NM) for centralizing notifications addressed to a user (U), when notification manager (NM) is in a communication network (CN), and it is connected to a first content server (CS1) and a second content server (CS2), said notification manager (NM) comprising:
- a service interface (IF) for establishing a first communication channel (CH1) with a first communication equipment (CE1) from the user (U), and for transmitting regularly a first set of aggregated notifications (SA1) to the first communication equipment (CE1),
- a collecting service (CL) for collecting regularly a first set of notifications (S1) from the first content server (CS1), and a second set of notifications (S2) from the second content server (CS2),
- an aggregation service (AG) for aggregating regularly the first set of notifications (S1) and second set of notifications (S2) into the first set of aggregated notifications (SA1),
- an adaptation service (AD) for adapting regularly the first set of aggregated notifications (SA1) according to the characteristics of the first communication equipment (CE1) of the user (U), where the first set of aggregated notifications (SA1) is displayed on a first widget (W1) running on the first communication equipment (CE1).

11. A notification manager (NM) according to claim 10, wherein the service interface (IF) for establishing a first communication channel (CH1) is further adapted:
- for receiving from the first communication equipment (CE1) a feedback message (F), said feedback message (F) comprising an event (E),
- for determining that the event (E) is related to a notification from the first set of notifications (S1) and is directed to the first content server (CS1),
- for forwarding the received feedback message (F) to the first content server (CS1).

12. A notification manager (NM) according to any of the claims 10 to 11, wherein the adapting service (AD) comprises means to adapt the first set of aggregated notifications (SA1) so that it can be provided to the user (U) through the first widget (W1) from the first communication equipment (CE1).

13. A first communication equipment (CE1) of a user (U), for centralizing notifications addressed to the user (U), comprising:
- a device interface (IFE) for establishing a first communication channel (CH1) with a notification manager (NM), and for receiving regularly from the notification manager (NM) a first set of aggregated notifications (SA1), said first set of aggregated notifications (SA1) comprising a first set of notifications (S1) from a first content server (CS1) and a second set of notifications (S2) from a second content server (CS2), said first set of aggregated notifications (SA1) having been adapted by the notification manager (NM) according to the characteristics of the first communication equipment (CE1),
- a display service (DI) for displaying the received first set of aggregated notifications (SA1) on a first widget (W1) running on the first communication equipment (CE1).

14. A first communication equipment (CE1) according to claim 13 further comprising an event determination device (DE) for determining an event (E) from the received first set of aggregated notifications (SA1), said event (E) being related to the first set of notifications (S1) from the first content server (CS1), and wherein the device interface (IFE) is further adapted for sending to the notification manager (NM) a message feedback (F) comprising the event (E).

15. A first communication equipment (CE1) according to claim 14, wherein the event determination device (ED) is further adapted to determine the event (E) by an interaction (IT) of the user (U) with the first widget (W1) running on the first communication equipment (CE1).

## Patentansprüche

1. Verfahren für einen Benachrichtigungs-Manager (NM) zum Zentralisieren von Benachrichtigungen, die für einen Nutzer (U) vorgesehen sind, wobei sich der Benachrichtigungs-Manager (NM) in einem Kommunikationsnetz (CN) befindet und mit einem ersten Inhaltsserver (CS1) und einem zweiten Inhaltsserver (CS2) verbunden ist, wobei das Verfahren die folgenden Schritte umfasst, die durch den Benachrichtigungs-Manager (NM) ausgeführt werden:
- Herstellen (301) eines ersten Kommunikationskanals (CH1) mit einer ersten Kommunikationsausrüstung (CE1), die durch den Nutzer (U) betrieben wird,
- regelmäßiges Erfassen (303) eines ersten Satzes von Benachrichtigungen (S1) von dem ersten Inhaltsserver (CS1),
- regelmäßiges Erfassen (305) eines zweiten Satzes von Benachrichtigungen (S2) von dem zweiten Inhaltsserver (CS2),
- regelmäßiges Aggregieren (307) des ersten Satzes von Benachrichtigungen (S1) und des zweiten Satzes von Benachrichtigungen (S2) zu einem ersten Satz aggregierter Benachrichtigungen (SA1),
- regelmäßiges Anpassen (309) des ersten Satzes aggregierter Benachrichtigungen (SA1) gemäß den Eigenschaften der ersten Kommunikationsausrüstung (CE1) des Nutzers (U),
- regelmäßiges Senden (311) des ersten Satzes aggregierter Benachrichtigungen (SA1) an die erste Kommunikationsausrüstung (CE1), wobei der erste Satz aggregierter Benachrichtigungen (SA1) auf einem ersten Widget (W1) angezeigt wird, das auf der ersten Kommunikationsausrüstung (CE1) abläuft.

2. Verfahren nach Anspruch 1, wobei das Verfahren des Weiteren die folgenden Schritte umfasst, die durch den Benachrichtigungs-Manager (NM) ausgeführt werden:
- Empfangen (317), von der ersten Kommunikationsausrüstung (CE1), einer Rückmeldungsnachricht (Feedback Message, F), wobei die Rückmeldungsnachricht (F) ein Ereignis (E) umfasst,
- Bestimmen (319), dass das Ereignis (E) mit einer Benachrichtigung von dem ersten Satz von Benachrichtigungen (S1) im Zusammenhang steht und an den ersten Inhaltsserver (CS1) gerichtet ist,
- Weiterleiten (321) der empfangenen Rückmeldungsnachricht (F) an den ersten Inhaltsserver (CS1).

3. Verfahren nach einem der Ansprüche 1 und 2, wobei der Benachrichtigungs-Manager (NM) mit einer zweiten Kommunikationsausrüstung (CE2) von dem Nutzer (U) verbunden ist, wobei die Verbindung durch einen zweiten Kommunikationskanal (CH2) hergestellt wird, und wobei das Verfahren des Weiteren den Schritt des Sendens des ersten Satzes aggregierter Benachrichtigungen (SA1) an die zweite Kommunikationsausrüstung (CE2) umfasst.

4. Verfahren nach einem der Ansprüche 1 bis 3, wobei der Schritt des regelmäßigen Anpassens (309) des ersten Satzes aggregierter Benachrichtigungen (SA1) des Weiteren den ersten Satzes aggregierter Benachrichtigungen (SA1) anpasst, der an den Nutzer (U) durch das erste Widget (W1) von der ersten Kommunikationsausrüstung (CE1) zu übermitteln ist.

5. Verfahren nach Anspruch 4, wobei das Verfahren des Weiteren einen Schritt des Übermittelns (323) einer ersten Benachrichtigungskonfiguration an den Benachrichtigungs-Manager (NM) durch die erste Kommunikationsausrüstung (CE1) umfasst.

6. Verfahren für eine erste Kommunikationsausrüstung (CE1), die durch einen Nutzer (U) betrieben wird, wobei das Verfahren die folgenden Schritte umfasst, die durch die erste Kommunikationsausrüstung (CE1) ausgeführt werden:
- Herstellen (301) eines ersten Kommunikationskanals (CH1) mit einem Benachrichtigungs-Manager (NM),
- regelmäßiges Empfangen (311), von dem Benachrichtigungs-Manager (NM), eines ersten Satzes aggregierter Benachrichtigungen (SA1), wobei der erste Satz aggregierter Benachrichtigungen (SA1) einen ersten Satz von Benachrichtigungen (S1) von einem ersten Inhaltsserver (CS1) und einen zweiten Satz von Benachrichtigungen (S2) von einem zweiten Inhaltsserver (CS2) umfasst, wobei der erste Satz aggregierter Benachrichtigungen (SA1) durch den Benachrichtigungs-Manager (NM) gemäß den Eigenschaften der ersten Kommunikationsausrüstung (CE1) angepasst wurde und auf einem ersten Widget (W1) angezeigt wird, das auf der ersten Kommunikationsausrüstung (CE1) abläuft.

7. Verfahren nach Anspruch 6, das des Weiteren die folgenden Schritte umfasst:
- Bestimmen (315) eines Ereignisses (E) anhand des empfangenen ersten Satzes aggregierter Benachrichtigungen (SA1), wobei das Ereignis (E) mit dem ersten Satz von Benachrichtigungen (S1) von dem ersten Inhaltsserver (CS1) im Zusammenhang steht,
- Senden (317), an den Benachrichtigungs-Manager (NM), einer Rückmeldungsnachricht (F), die das Ereignis (E) umfasst.

8. Verfahren nach einem der Ansprüche 6 und 7, wobei das Verfahren des Weiteren einen Schritt umfasst, den empfangenen ersten Satz aggregierter Benachrichtigungen (SA1) durch das erste Widget (W1) von der ersten Kommunikationsausrüstung (CE1) an den Nutzer (U) zu übermitteln (313).

9. Verfahren nach Anspruch 8, wobei das Ereignis (E) anhand einer (313) durch den Nutzer (U) generierten Interaktion (IT) bestimmt wird (315), wobei der Nutzer (U) mit dem ersten Widget (W1) von der ersten Kommunikationsausrüstung (CE1) interagiert.

10. Benachrichtigungs-Manager (NM) zum Zentralisieren von Benachrichtigungen, die an einen Nutzer (U) adressiert sind, wenn sich der Benachrichtigungs-Manager (NM) in einem Kommunikationsnetz (CN) befindet, und er mit einem ersten Inhaltsserver (CS1) und einem zweiten Inhaltsserver (CS2) verbunden ist, wobei der Benachrichtigungs-Manager (NM) Folgendes umfasst:
- eine Dienst-Schnittstelle (Interface, IF) zum Herstellen eines ersten Kommunikationskanals (CH1) mit einer ersten Kommunikationsausrüstung (CE1) von dem Nutzer (U), und zum regelmäßigen Senden eines ersten Satzes aggregierter Benachrichtigungen (SA1) an die erste Kommunikationsausrüstung (CE1),
- einen Erfassungsdienst (CL) zum regelmäßigen Erfassen eines ersten Satzes von Benachrichtigungen (S1) von dem ersten Inhaltsserver (CS1) und eines zweiten Satzes von Benachrichtigungen (S2) von dem zweiten Inhaltsserver (CS2),
- einen Aggregationsdienst (AG) zum regelmäßigen Aggregieren des ersten Satzes von Benachrichtigungen (S1) und des zweiten Satzes von Benachrichtigungen (S2) zu dem ersten Satz aggregierter Benachrichtigungen (SA1),
- einen Anpassungsdienst (AD) zum regelmäßigen Anpassen des ersten Satzes aggregierter Benachrichtigungen (SA1) gemäß den Eigenschaften der ersten Kommunikationsausrüstung (CE1) des Nutzers (U), wobei der erste Satz aggregierter Benachrichtigungen (SA1) auf einem ersten Widget (W1) angezeigt wird, das auf der ersten Kommunikationsausrüstung (CE1) abläuft.

11. Benachrichtigungs-Manager (NM) nach Anspruch 10, wobei die Dienst-Schnittstelle (IF) zum Herstellen eines ersten Kommunikationskanals (CH1) des Weiteren für Folgendes ausgelegt ist:
- Empfangen, von der ersten Kommunikationsausrüstung (CE1), einer Rückmeldungsnachricht (F), wobei die Rückmeldungsnachricht (F) ein Ereignis (E) umfasst,
- Bestimmen, dass das Ereignis (E) im Zusammenhang mit einer Benachrichtigung von dem ersten Satz von Benachrichtigungen (S1) steht und an den ersten Inhaltsserver (CS1) gerichtet ist,
- Weiterleiten der empfangenen Rückmeldungsnachricht (F) an den ersten Inhaltsserver (CS1).

12. Benachrichtigungs-Manager (NM) nach einem der Ansprüche 10 und 11, wobei der Anpassungsdienst (AD) ein Mittel umfasst, um den ersten Satz aggregierter Benachrichtigungen (SA1) so anzupassen, dass er durch das erste Widget (W1) von der ersten Kommunikationsausrüstung (CE1) an den Nutzer (U) übermittelt werden kann.

13. Erste Kommunikationsausrüstung (CE1) eines Nutzers (U) zum Zentralisieren von Benachrichtigungen, die an den Nutzer (U) adressiert sind, die Folgendes umfasst:
- eine Geräteschnittstelle (IFE) zum Herstellen eines ersten Kommunikationskanals (CH1) mit einem Benachrichtigungs-Manager (NM), und zum regelmäßigen Empfangen, von dem Benachrichtigungs-Manager (NM), eines ersten Satzes aggregierter Benachrichtigungen (SA1), wobei der erste Satz aggregierter Benachrichtigungen (SA1) einen ersten Satz von Benachrichtigungen (S1) von einem ersten Inhaltsserver (CS1) und einen zweiten Satz von Benachrichtigungen (S2) von einem zweiten Inhaltsserver (CS2) umfasst, wobei der erste Satz aggregierter Benachrichtigungen (SA1) durch den Benachrichtigungs-Manager (NM) gemäß den Eigenschaften der ersten Kommunikationsausrüstung (CE1) angepasst wurde,
- einen Anzeigedienst (DI) zum Anzeigen des empfangenen ersten Satzes aggregierter Benachrichtigungen (SA1) auf einem ersten Widget (W1), das auf der ersten Kommunikationsausrüstung (CE1) abläuft.

14. Erste Kommunikationsausrüstung (CE1) nach Anspruch 13, die des Weiteren eine Ereignisbestimmungsvorrichtung (DE) zum Bestimmen eines Ereignisses (E) anhand des empfangenen ersten Satzes aggregierter Benachrichtigungen (SA1) umfasst, wobei das Ereignis (E) mit dem ersten Satz von Benachrichtigungen (S1) von dem ersten Inhaltsserver (CS1) im Zusammenhang steht, und wobei die Geräteschnittstelle (IFE) des Weiteren dafür ausgelegt ist, an den Benachrichtigungs-Manager (NM) eine Nachrichtenrückmeldung (F) zu senden, die das Ereignis (E) umfasst.

15. Erste Kommunikationsausrüstung (CE1) nach Anspruch 14, wobei die Ereignisbestimmungsvorrichtung (ED) des Weiteren dafür ausgelegt ist, das Ereignis (E) durch eine Interaktion (IT) des Nutzers (U) mit dem ersten Widget (W1) zu bestimmen, das auf der ersten Kommunikationsausrüstung (CE1) abläuft.

## Revendications

1. Procédé pour un gestionnaire de notifications (NM), pour centraliser les notifications destinées à un utilisateur (U), ledit gestionnaire de notifications (NM) se trouvant dans un réseau de communication (CN) et étant connecté à un premier serveur de contenu (CS1) et à un second serveur de contenu (CS2), ledit procédé comprenant les étapes suivantes exécutées par le gestionnaire de notifications (NM) et consistant à :
- établir (301) un premier canal de communication (CH1) avec un premier équipement de communication (CE1) exploité par l'utilisateur (U),
- recueillir (303) régulièrement un premier ensemble de notifications (S1) à partir du premier serveur de contenu (CS1),
- recueillir (305) régulièrement un second ensemble de notifications (S2) à partir du second serveur de contenu (CS2),
- agréger (307) régulièrement le premier ensemble de notifications (S1) et le second ensemble de notifications (S2) en un premier ensemble de notifications agrégées (SA1),
- adapter (309) régulièrement le premier ensemble de notifications agrégées (SA1) en fonction des caractéristiques du premier équipement de communication (CE1) de l'utilisateur (U),
- transmettre (311) régulièrement le premier ensemble de notifications agrégées (SA1) au premier équipement de communication (CE1), où le premier ensemble de notifications agrégées (SA1) est affiché sur un premier logiciel graphique (W1) exécuté sur le premier équipement de communication (CE1).

2. Procédé selon la revendication 1, dans lequel le procédé comprend en outre les étapes suivantes effectuées par le gestionnaire de notifications (NM) et consistant à :
- recevoir (317) du premier équipement de communication (CE1) un message de retour (F), ledit message de retour (F) comprenant un événement (E),
- déterminer (319) que l'événement (E) est lié à une notification du premier ensemble de notifications (S1) et est dirigé vers le premier serveur de contenu (CS1),
- retransmettre (321) le message de retour reçu (F) au premier serveur de contenu (CS1).

3. Procédé selon l'une quelconque des revendications 1 à 2, dans lequel le gestionnaire de notifications (NM) est connecté à un second équipement de communication (CE2) provenant de l'utilisateur (U), ladite connexion étant établie à l'aide d'un second canal de communication (CH2), et ledit procédé comprenant en outre l'étape consistant à transmettre le premier ensemble de notifications agrégées (SA1) au second équipement de communication (CE2).

4. Procédé selon l'une quelconque des revendications 1 à 3, dans lequel l'étape consistant à adapter (309) régulièrement le premier ensemble de notifications agrégées (SA1) adapte en outre ledit premier ensemble de notifications agrégées (SA1) à fournir à l'utilisateur (U) par l'intermédiaire du premier logiciel graphique (W1) à partir du premier équipement de communication (CE1).

5. Procédé selon la revendication 4, dans lequel le procédé comprend en outre une étape consistant à fournir (323) une première configuration de notifications au gestionnaire de notifications (NM), par le premier équipement de communication (CE1).

6. Procédé pour un premier équipement de communication (CE1) exploité par un utilisateur (U), ledit procédé comprenant les étapes suivantes exécutées par le premier équipement de communication (CE1):
- établir (301) un premier canal de communication (CH1) avec un gestionnaire de notifications (NM),
- recevoir (311) régulièrement du gestionnaire de notifications (NM) un premier ensemble de notifications agrégées (SA1), ledit premier ensemble de notifications agrégées (SA1) comprenant un premier ensemble de notifications (S1) provenant d'un premier serveur de contenu (CS1) et un second ensemble de notifications (S2) provenant d'un second serveur de contenu (CS2), ledit premier ensemble de notifications agrégées (SA1) ayant été adapté par le gestionnaire de notifications (NM) en fonction des caractéristiques du premier équipement de communication (CE1) et étant affiché sur un premier logiciel graphique (W1) fonctionnant sur le premier équipement de communication (CE1).

7. Procédé selon la revendication 6, comprenant en outre les étapes suivantes, consistant à :
- déterminer (315) un événement (E) à partir du premier ensemble de notifications agrégées (SA1) reçu, ledit événement (E) étant lié au premier ensemble de notifications (S1) provenant du premier serveur de contenu (CS1),
- envoyer (317) au gestionnaire de notifications (NM) un message de retour (F) comprenant l'événement (E).

8. Procédé selon l'une quelconque des revendications 6 à 7, dans lequel le procédé comprend en outre une étape consistant à fournir (313) à l'utilisateur (U) par l'intermédiaire du premier logiciel graphique (W1) à partir du premier équipement de communication (CE1) le premier ensemble de notifications agrégées reçu (SA1).

9. Procédé selon la revendication 8, dans lequel l'événement (E) est déterminé (315) à partir d'une interaction (IT) générée (313) par l'utilisateur (U), ledit utilisateur (U) interagissant avec le premier logiciel graphique (W1) provenant du premier équipement de communication (CE1).

10. Gestionnaire de notifications (NM) pour centraliser les notifications adressées à un utilisateur (U), lorsque le gestionnaire de notifications (NM) se trouve dans un réseau de communication (CN) et est connecté à un premier serveur de contenu (CS1) et à un second serveur de contenu (CS2), ledit gestionnaire de notifications (NM) comprenant :
- une interface de service (IF) pour établir un premier canal de communication (CH1) avec un premier équipement de communication (CE1) à partir de l'utilisateur (U), et pour transmettre régulièrement un premier ensemble de notifications agrégées (SA1) au premier équipement de communication (CE1),
- un service de collecte (CL) pour recueillir régulièrement un premier ensemble de notifications (S1) provenant du premier serveur de contenu (CS1) et un second ensemble de notifications provenant du second serveur de contenu (CS2),
- un service d'agrégation (AG) pour agréger régulièrement le premier ensemble de notifications (S1) et le second ensemble de notifications (S2) dans le premier ensemble de notifications agrégées (SA1),
- un service d'adaptation (AD) pour adapter régulièrement le premier ensemble de notifications agrégées (SA1) en fonction des caractéristiques du premier équipement de communication (CE1) de l'utilisateur (U), où le premier ensemble de notifications agrégées (SA1) est affiché sur un premier logiciel graphique (W1) exécuté sur le premier équipement de communication (CE1).

11. Gestionnaire de notifications (NM) selon la revendication 10, dans lequel l'interface de service (IF) pour établir un premier canal de communication (CH1) est en outre conçue pour :
- recevoir du premier équipement de communication (CE1) un message de retour (F), ledit message de retour (F) comprenant un événement (E),
- déterminer que l'événement (E) est lié à une notification du premier ensemble de notifications (S1) et est dirigé vers le premier serveur de contenu (CS1),
- retransmettre le message de retour reçu (F) au premier serveur de contenu (CS1).

12. Gestionnaire de notifications (NM) selon l'une quelconque des revendications 10 à 11, dans lequel le service d'adaptation (AD) comprend des moyens pour adapter le premier ensemble de notifications agrégées (SA1) afin qu'il puisse être fourni à l'utilisateur (U) à l'aide du premier logiciel graphique (W1) à partir du premier équipement de communication (CE1).

13. Premier équipement de communication (CE1) d'un utilisateur (U), pour centraliser des notifications adressées à l'utilisateur (U), comprenant :
- une interface de dispositif (IFE) pour établir un premier canal de communication (CH1) avec un gestionnaire de notifications (NM), et pour recevoir régulièrement du gestionnaire de notifications (NM) un premier ensemble de notifications agrégées (SA1), ledit premier ensemble de notifications agrégées (SA1) comprenant un premier ensemble de notifications (S1) provenant d'un premier serveur de contenu (CS1) et un second ensemble de notifications (S2) provenant d'un second serveur de contenu (CS2), ledit premier ensemble de notifications agrégées (SA1) ayant été adapté par le gestionnaire de notifications (NM) en fonction des caractéristiques du premier équipement de communication (CE1),
- un service d'affichage (DI) pour afficher le premier ensemble de notifications agrégées (SA1) reçues sur un premier logiciel graphique (W1) s'exécutant sur le premier équipement de communication (CE1).

14. Premier équipement de communication (CE1) selon la revendication 13, comprenant en outre un dispositif de détermination d'événement (DE) pour déterminer un événement (E) à partir du premier ensemble de notifications agrégées reçues (SA1), ledit événement (E) étant lié au premier ensemble de notifications (S1) provenant du premier serveur de contenu (CS1), et dans lequel l'interface de dispositif (IFE) est en outre conçue pour envoyer au gestionnaire de notifications (NM) un message de retour (F) comprenant l'événement (E).

15. Premier équipement de communication (CE1) selon la revendication 14, dans lequel le dispositif de détermination d'événement (ED) est en outre conçu pour déterminer l'événement (E) par une interaction (IT) de l'utilisateur (U) avec le premier logiciel graphique (W1) s'exécutant sur le premier équipement de communication (CE1).
